# EUROPEAN PATENT APPLICATION

(11) **EP 1 811 794 A1**
(43) Date of publication of application: **25.07.2007**
(21) Application number: 05811660.9
(22) Date of filing: 02.12.2005
(51) Int. Cl.: H04Q 7/22, H04Q 7/36, H04Q 7/38, H04B 1/707, H04J 11/00

(54) **COMMUNICATION TERMINAL APPARATUS, CONTROL STATION, AND MULTICARRIER COMMUNICATION METHOD**

(30) Priority: 09.12.2004 JP 2004357309; 26.10.2005 JP 2005311426
(71) Applicant: MATSUSHITA ELECTRIC INDUSTRIAL CO., LTD., Osaka 571-8501 (JP)
(72) Inventor: HAGA, Hiroki c/o Matsushita Electric Industrial Co. Ltd, Chuo-ku, Osaka-shi, Osaka 540-6319 (JP); HIRAMATSU, Katsuhiko c/o Matsushita Electric Industrial Co. Ltd, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/022195
(87) International publication number: WO 2006/062041

(57) **Abstract**

A communication terminal apparatus wherein a base station apparatus uses only subcarriers, which provide good propagation circumstance for the communication terminal apparatus, to transmit data, thereby improving the transmission efficiency of the whole system and wherein the frequency scheduling is performed in view of whether the user exists in a handover area, thereby providing a site diversity effect and hence improving the reception quality and the throughput. In this apparatus, a cell-#1 reception quality determining part (108) determines the reception quality of the cell-# 1 for each of subcarrier blocks. A cell-#2 reception quality determining part (109) determines the reception quality of the cell-#2 for each of the subcarrier blocks. A cell subcarrier selecting part (110) selects, based on both a determination result of the reception quality and a threshold value, a base station apparatus for each of the subcarrier blocks, that is, determines whether to perform a handover for each of the subcarrier blocks.

## Description

### Technical Field

The present invention relates to a communication terminal apparatus, control station and multicarrier communication method, for instance, a communication terminal apparatus, control station and communication method to be used in a multi-user communication system using OFDM (Orthogonal Frequency Division Multiplexing) as a modulation scheme.

### Background Art

Studies are being conducted on frequency scheduling, which is a method of adaptively allocating subcarriers to each user, in a multi-user communication system using OFDM as modulation scheme (for instance, Patent Document 1). In such frequency scheduling, subcarriers are allocated in accordance with the required transmission rate, the required BER (Bit Error Rate) and the allowable delay time, which represent the conditions required for each type of application. Studies have also been conventionally conducted on the application of frequency scheduling to a communication system using MC-CDMA (multicarrier-CDMA scheme (for instance, Non-Patent Document 1).
Patent Document 1: Japanese Patent Application Laid-Open No. 2003-18117
Non-Patent Document 1: Hara, Kawabata, Duan, Sekiguchi "MC-CDM System for Packet Communications Using Frequency Scheduling", Technical Report of IEICE, RCS2002-129 (2002-07)

### Disclosure of Invention

### Problems to be Solved by the Invention

However, since frequency scheduling is carried out in the conventional apparatuses without taking into account the location of the user performing communication, inside the cell if the user is in the handover area, there is a problem that the transmission rate cannot be sufficiently improved even when a subcarrier that provides excellent propagation conditions is allocated for data transmission and frequency scheduling is performed, and the reception quality and throughput cannot be sufficiently improved.

It is therefore an object of the present invention to provide a communication terminal apparatus, control station and multicarrier communication method, whereby the base station apparatus transmits data taking into account whether the user is in the handover area and using only subcarriers which provide good propagation conditions for the communication terminal apparatus, thereby improving the transmission rate of the overall system, and whereby frequency scheduling is carried out taking into account whether the user is in the handover area, thereby achieving the site diversity effect and improving reception quality and throughput.

### Means for Solving the Problem

The communication terminal apparatus of the present invention adopts a configuration having: a reception quality measuring section that divides subcarriers into a plurality of groups and measures reception quality of signals transmitted from a plurality of base station apparatuses per group; a selecting section that selects a base station apparatus for each group based on the reception quality measured in the reception quality measuring section; a transmitting section that transmits information about the base station apparatuses selected in the selecting section; a receiving section that receives multicarrier signals transmitted from the base station apparatuses based on the information about the base station apparatuses transmitted from the transmitting section; and a decoding section that decodes the multicarrier signals received in the receiving section in accordance with the result of the selection.

Also, the communication terminal apparatus of the present invention adopts a configuration having: a reception quality measuring section that divides subcarriers into a plurality of groups and measures reception quality of signals transmitted from a plurality of sectors per group; a selecting section that selects a sector for each group based on the reception quality measured in the reception quality measuring section; a transmitting section that transmits information about the sectors selected by the selecting section; a receiving section that receives multicarrier signals transmitted from the sectors based on the information about the sectors transmitted from the transmitting section; and a decoding section that decodes the multicarrier signals received by the receiving section, in accordance with the result of the selection.

The control apparatus of the present invention adopts a configuration having: a reception quality difference information acquiring section that acquires reception quality difference information representing information about reception quality differences between the most damaged reception quality among reception qualities of signals at a communication terminal for each group comprised of a plurality of subcarriers, said signals being transmitted from base station apparatuses allocated to the communication terminal apparatus, and the reception qualities of the signals from base station apparatuses at the communication terminal apparatus for each group; a selecting section that selects, for each group, a base station apparatus which is not allocated to other communication terminal apparatuses based on the reception quality difference information acquired by the reception quality difference information acquiring section, as a base station apparatus to be allocated to the communication terminal apparatus; and a reporting section that reports information about the base station apparatus selected by the selecting section to the communication terminal apparatus.

The multicarrier communication method of the present invention includes the steps of: dividing subcarriers into a plurality of groups and measuring reception quality of signals transmitted from a plurality of base station apparatuses for each group; selecting a base station apparatus for each group based on the measured reception quality; transmitting information about the selected base station apparatus; receiving multicarrier signals transmitted from the base station apparatuses based on the transmitted information about the base station apparatus; and decoding the received multicarrier signals in accordance with results of the selection. Advantageous Effects of the Invention

According to the present invention, the base station apparatus transmits data using only subcarriers that provide good propagation conditions for communication terminal apparatus, thereby improving the transmission rate of the overall system, and carries out frequency scheduling taking into account whether the user is in the handover area, thereby achieving a site diversity effect and improving reception quality and throughput.

### Brief Description of Drawings

FIG.1 is a block diagram showing a configuration of a communication terminal apparatus, according to embodiment 1 of the present invention;
FIG.2 is a block diagram showing a configuration of a base station apparatus, according to embodiment 1 of the present invention;
FIG. 3 shows a frame format for the condition in which the communication terminal apparatus according to embodiment 1 of the present invention carries out communication with the base station apparatus in the handover area;
FIG.4 shows the frame format of a communication system according to embodiment 1 of the present invention;
FIG.5 is a sequence diagram showing the operation of the communication terminal apparatus, base station apparatus and control station according to embodiment 1 of the present invention;
FIG.6 is a view for showing reception quality for each subcarrier block of the base station apparatus according to embodiment 1 of the present invention;
FIG.7 is a block diagram showing a configuration of a communication terminal apparatus according to embodiment 2 of the present invention;
FIG.8 is a block diagram showing a configuration of a base station apparatus according to embodiment 2 of the present invention;
FIG.9 is a sequence diagram showing the operation of the communication terminal apparatus and the base station apparatus according to embodiment 2 of the present invention;
FIG.10 shows reception quality for each subcarrier block of the base station apparatus according to embodiment 2 of the present invention;
FIG.11 is a block diagram showing a configuration of a communication terminal apparatus according to embodiment 3 of the present invention;
FIG.12 is a block diagram showing a configuration of a control station according to embodiment 3 of the present invention;
FIG.13 is a sequence diagram showing the operation of the communication terminal apparatus, base station apparatus and control station according to embodiment 3 of the present invention;
FIG.14 shows reception quality of each subcarrier block according to embodiment 3 of the present invention; and
FIG. 15 shows difference in reception quality between subcarrier blocks according to embodiment 3 of the present invention. Best Mode for Carrying Out the Invention

Next, embodiments of the present invention will be described in detail with reference to the accompanying drawings.

### (Embodiment 1)

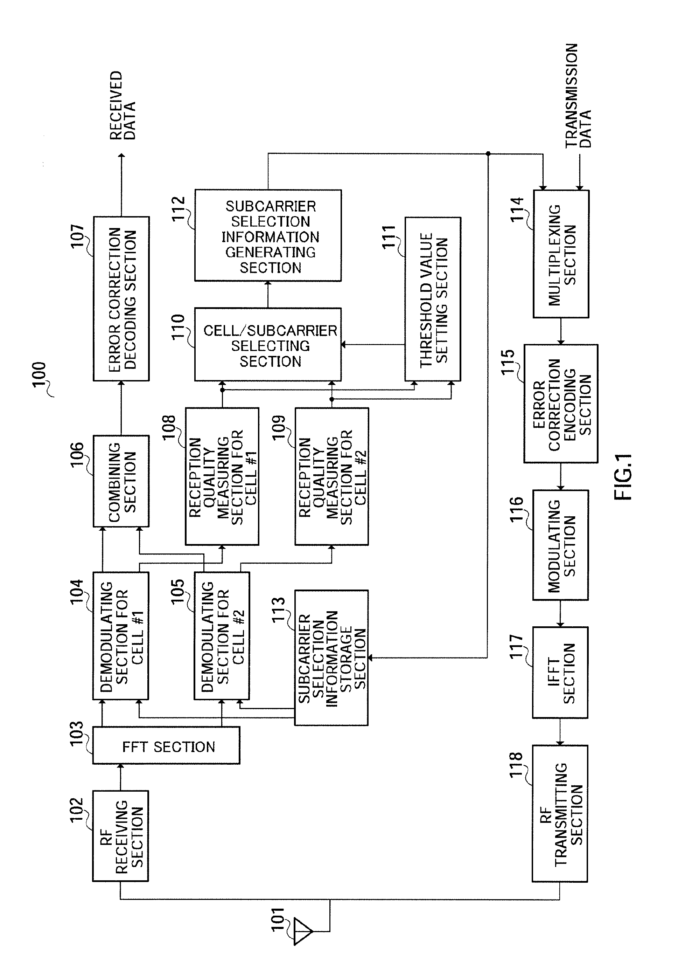

FIG.1 is a block diagram showing the configuration of communication terminal apparatus 100 according to embodiment 1 of the present invention. In embodiment 1, a description will be given of a case where inter-cell handover is performed between cell #1 and cell #2.

Antenna 101 transmits a transmission signal inputted from RF transmitting section 118, and outputs a multicarrier signal it has received, to RF receiving section 102.

RF receiving section 102 down-converts the multicarrier signal inputted from antenna 101, from radio frequency to baseband frequency, and outputs the result to FFT (Fast Fourier Transform) section 103.

FFT section 103 performs fast-Fourier transform on the multicarrier signal inputted from RF receiving section 102 and converts the time domain signal into a frequency domain signal, and outputs this signal to demodulating section 104 for cell #1 and demodulating section 105 for cell #2.

Demodulating section 104 for cell #1 demodulates the multicarrier signal inputted from FFT section 103, based on subcarrier selection information inputted from subcarrier selection information storage section 113, and outputs the demodulated signal to combining section 106 and reception quality measuring section 108 for cell #1. More specifically, in the multicarrier signal inputted from FFT section 103, demodulating section 104 for cell #1 demodulates only the subcarrier, that is designated in the subcarrier selection information, and outputs the result to combining section 106 and reception quality measuring section 108 for cell #1. In this way, demodulating section 104 for cell #1 can demodulate the subcarrier signal to which the signal transmitted from the base station apparatus of cell #1 is allocated.

Demodulating section 105 for cell #2 demodulates the multicarrier signal inputted from FFT section 103, based on the subcarrier selection information inputted from subcarrier selection information storage section 113, and outputs the result to combining section 106 and reception qualitymeasuring section 109 for cell #2. More specifically, in the multicarrier signal inputted from FFT section 103, demodulating section 105 for cell #2 demodulates only the subcarrier, that is designated in the subcarrier selection information, and outputs the result to combining section 106 and reception quality measuring section 109 for cell #2. In this way, demodulating section 105 for cell #2 can demodulate the signal of the subcarrier to which the signal transmitted from base station apparatus of cell #2 is allocated.

Combining section 106 combines the demodulated multicarrier signal inputted from demodulating section 104 for cell #1 and the demodulated multicarrier signal inputted from demodulating section 105 for cell #2, and outputs the result to error correction decoding section 107.

Error correction decoding section 107 performs error correction decoding on the combined multicarrier signal inputted from combining section 106, and outputs the result as received data.

Reception quality measuring section 108 for cell #1 divides the subcarriers into a plurality of groups (that is, into a plurality of subcarrier blocks), and measures reception quality of cell #1 for each subcarrier block, using the known signal included in the demodulated multicarrier signal inputted from demodulating section 104 for cell #1. Further, reception quality measuring section 108 for cell #1 finds an average of measurement results for each subcarrier block, and outputs average measurement results to cell/subcarrier selecting section 110 and threshold value setting section 111.

Reception quality measuring section 109 for cell #2 divides the subcarriers into a plurality of subcarrier blocks, and measures reception quality of cell #2 for each subcarrier block using the known signal included in the demodulated multicarrier signals inputted from demodulating section 105 for cell #2. Further, reception quality measuring section 109 for cell #2 finds an average of measurement results for each subcarrier block and outputs average measurement results to cell/subcarrier selecting section 110 and threshold value setting section 111.

Cell/subcarrier selecting section 110 selects a base station apparatus for each subcarrier block, based on the average reception quality measurement results inputted from reception quality measuring section 108 for cell #1 and reception quality measuring section 109 for cell #2 and based on the threshold value inputted from threshold value setting section 111. Then, cell/subcarrier selecting section 110 outputs the selection result for each subcarrier block, to subcarrier selection information generating section 112.

Threshold value setting section 111 adaptively sets the threshold value for each base station apparatusin other words, for each cell--in accordance with the reception quality measurement results inputted from reception quality measuring section 108 for cell #1 and reception quality measuring section 109 for cell #2. Then, threshold value setting section 111 outputs the threshold values to cell/subcarrier selecting section 110. For the threshold value setting method, arbitrary methods can be employed, including a method of setting the same threshold value for cell #1 and cell #2 and a method of setting different threshold values for cell #1 and cell #2.

Subcarrier selection information generating section 112 generates subcarrier selection information, that represents information about the base station apparatus selected for each subcarrier block, based on the selection results inputted from cell/subcarrier selecting section 110. Then, subcarrier selection information generating section 112 outputs the generated subcarrier selection information to subcarrier selection information storage section 113 and multiplexing section 114.

Subcarrier selection information storage section 113 stores the subcarrier selection information inputted from subcarrier selection information generating section 112. Then, subcarrier selection information storage section 113 outputs the stored subcarrier selection information to demodulating section 104 for cell #1 and demodulating section 105 for cell #2.

Multiplexing section 114 multiplexes the subcarrier selection information and the transmission data inputted from subcarrier selection information generating section 112, and outputs the result to error correction encoding section 115.

Error correction encoding section 115 performs error correction encoding on the subcarrier selection information and the transmission data inputted from multiplexing section 114, and outputs the result to modulating section 116.

Modulating section 116 modulates the subcarrier selection information and the transmission data inputted from error correction encoding section 115 to generate a transmission signal, and outputs the generated transmission signal to IFFT (Inverse Fast-Fourier Transform) section 117.

IFFT section 117 performs inverse fast-Fourier transform of the transmission signal inputted from modulating section 116 and converts the frequency domain signal into a time domain signal, and outputs this signal to RF transmitting section 118.

RF transmitting section 118 up-converts the transmission signal inputted from IFFT section 117 from baseband frequency into radio frequency, and outputs the result to antenna 101.

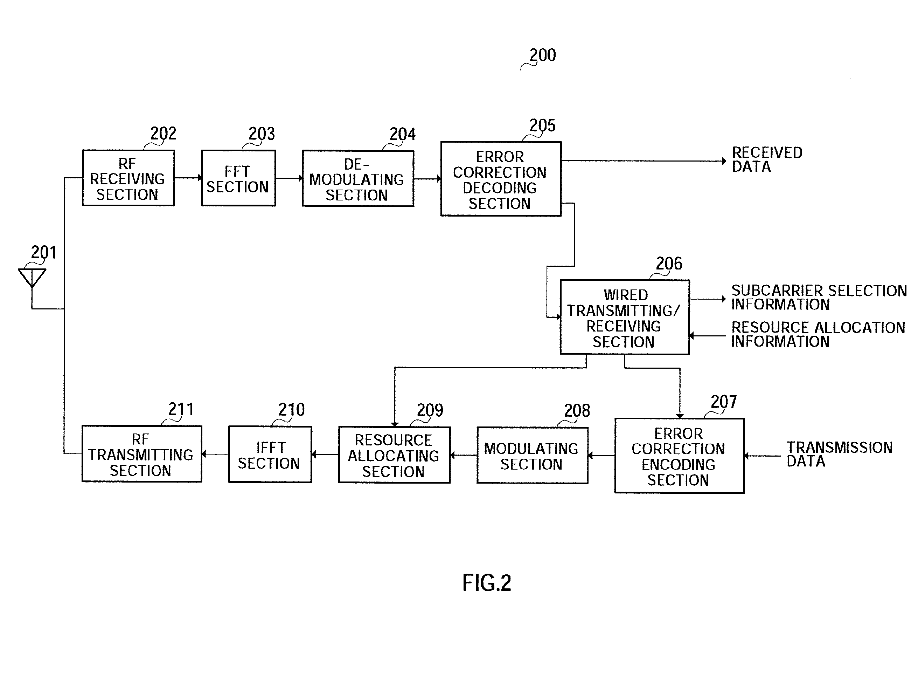

Next, the configuration of base station apparatus 200, which is the communicating party of communication terminal apparatus 100, will be described using FIG.2. FIG.2 is a block diagram showing a configuration of base station apparatus 200.

Antenna 201 transmits a multicarrier signal inputted from RF transmitting section 211, and outputs the received signal to RF receiving section 202.

RF receiving section 202 down-converts the received signal inputted from antenna 201 from radio frequency into baseband frequency, and outputs the result to FFT section 203.

FFT section 203 performs fast-Fourier transform of the received signal inputted from RF receiving section 202 and converts the time domain signal into a frequency domain signal, and outputs this signal to demodulating section 204.

Demodulating section 204 demodulates the received signal inputted from FFT section 203 and outputs the demodulated signal to error correction decoding section 205.

Error correction decoding section 205 performs error correction decoding on the received signal inputted from demodulating section 204 to extract the subcarrier selection information included in the received signal, and outputs the extracted subcarrier selection information to wired transmitting/receiving section 206, and, outputs the result after the extraction of subcarrier selection information as received data.

Wired transmitting/receiving section 206 outputs the subcarrier selection information inputted from error correction decoding section 205 to resource allocating section 209 and an control station (not shown). Also, wired transmitting/receiving section 206 receives the resource allocation information from the control station, and outputs this information to error correction encoding section 207 and resource allocating section 209. Here, the resource allocation information represents information according to which each base station apparatus 200 allocates resources to each communication terminal apparatus 100, based on channel quality between each communication terminal apparatus 100 and base station apparatus 200, and this resource allocation information is determined by the control station and reported to base station apparatus 200. The control station which receives the subcarrier selection information allocates resources so that each base station apparatus 200 is allocated to the subcarrier which communication terminal apparatus 100 has selected for each base station apparatus 200.

Error correction encoding section 207 carries out error correction encoding on the transmission data, based on the resource allocation information inputted from wired transmitting/receiving section 206, and outputs the result to modulating section 208.

Modulating section 208 modulates the transmission data inputted from error correction encoding section 207 to generate a transmission signal, and outputs the generated transmission signal to resource allocating section 209.

Resource allocating section 209 allocates the transmission signal inputted frommodulating section 208, to the subcarrier block in which base station apparatus 200 is selected by communication terminal apparatus 100and in which base station apparatus 200 is allocated resources by the control station, based on the subcarrier selection information inputted from wired transmitting section, and outputs the result to IFFT section 210.

IFFT section 210 performs fast Fourier transform of the transmission signal inputted from resource allocating section 209 and converts the frequency domain signal into a time domain signal, thereby generating a multicarrier signal. Then, IFFT section 210 outputs the generated multicarrier signal to RF transmitting section 211.

RF transmitting section 211 up-converts the multicarrier signal inputted from IFFT section 210 from a baseband frequency to a radio frequency, and outputs the result to antenna 201.

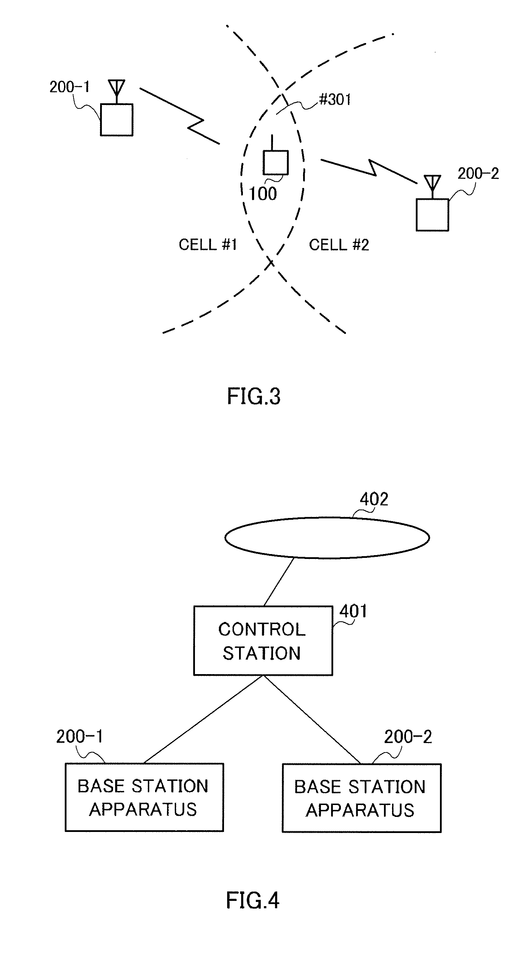

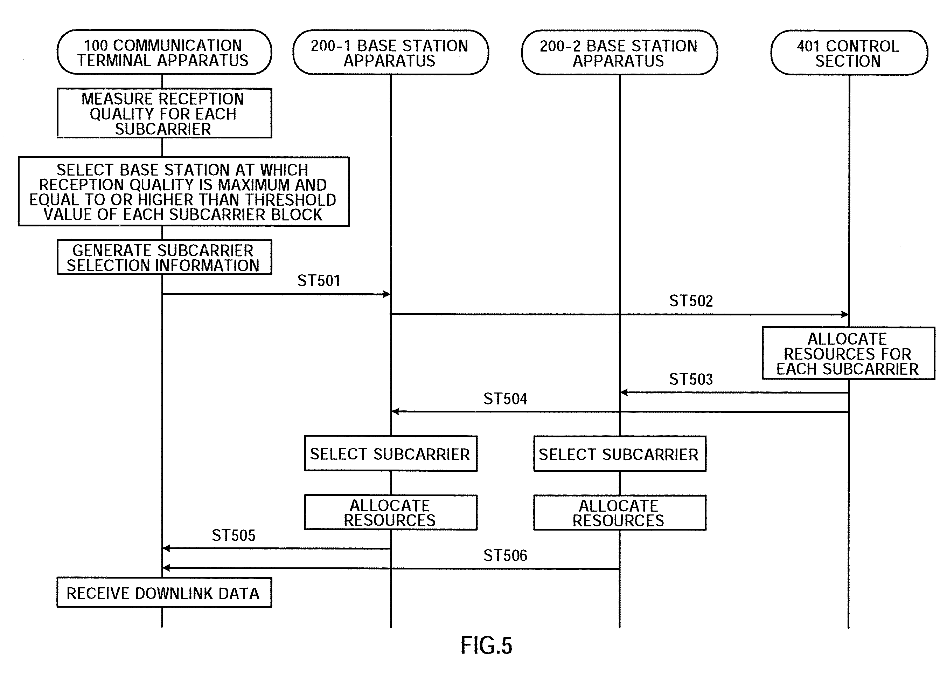

Next, the operation of communication terminal apparatus 100 and base station apparatus 200 will be described using FIG.3 to FIG.5. FIG. 3 shows a state where communication terminal apparatus 100 communicates with base station apparatus 2001-1 and base station apparatus 200-2 in a handover area. FIG.4 shows the configuration of the communication system, FIG.5 is a sequence diagram showing the operation of communication terminal apparatus 100, base station apparatus 200 and control station 401. In FIG.3 to FIG.5, communication terminal apparatus has the same configuration as in FIG.1, and base station apparatus 200-1 and base station apparatus 200-2 have the same configuration as in FIG.2.

As shown in FIG.3, communication terminal apparatus 100 performs communication with base station 200-1 apparatus of cell #1 and base station apparatus 200-2 of cell #2, in handover area #301. Also, as shown in FIG.4, control station 401 is provided in higher layer of base station apparatuses 200-1 and 200-2 to manage base station apparatuses 200-1 and 200-2, and this control station 801 is connected to communication network 402.

InFIG.5, reception quality measuring section 108 for cell #1 and reception quality measuring section 109 for cell #2 of communication terminal apparatus 100 measure reception quality for each subcarrier block and find an average.

Next, between base station apparatus 200-1 and base station apparatus 200-2, cell/subcarrier selecting section 110 of communication terminal apparatus 100 selects, for each subcarrier block, the base station apparatus having, for instance, the received SINR (Signal-to-Interference plus Noise Ratio), which represents the measured value of reception quality, is maximum and equal to or higher than a threshold value. Also, if the received SINR of both base station apparatus 200-1 and base station apparatus 200-2 is not equal to or higher than the threshold value, cell/subcarrier selecting section 110 selects neither base station apparatus.

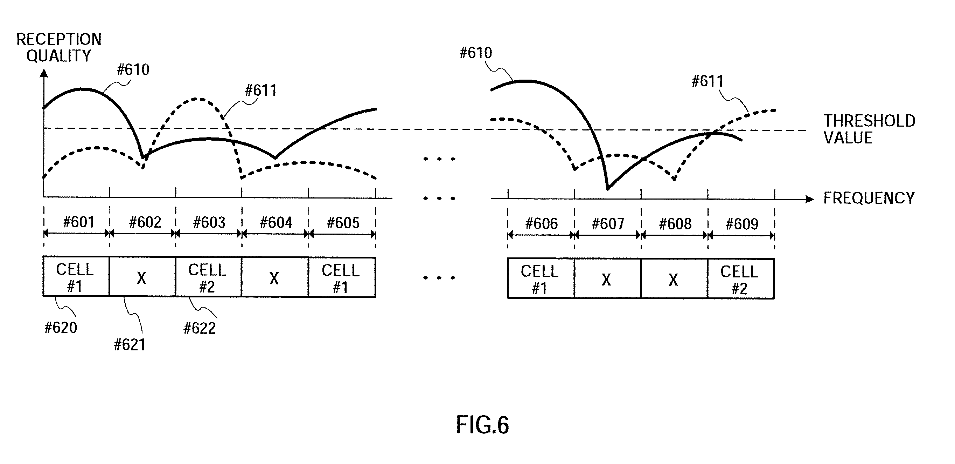

FIG.6 shows reception quality #610 of base station apparatus 200-1 and reception quality #611 of base station apparatus 200-2 in each subcarrier block. Subcarrier blocks #601 to #609 each show one subcarrier block. According to FIG.6, in subcarrier block #601, reception quality #610 of base station apparatus 200-1 is better than reception quality #611 of base station apparatus 200-2, and the measured value of reception quality #610 in base station apparatus 200-1 is equal to or higher than the threshold value, and so cell/subcarrier selecting section 110 selects base station apparatus 200-1 (that is, cell #1 (#620)). Also, in subcarrier block #602, the measured values of reception quality of both base station apparatus 200-1 and base station apparatus 200-2 are less than the threshold value, cell/subcarrier selecting section 110 selects neither base station apparatus 200-1 nor base station apparatus 200-2 (#621). Therefore, no data is transmitted in subcarrier block #602. Also, in subcarrier block #603, reception quality #611 of base station apparatus 200-2 is better than reception quality #610 of base station apparatus 200-1 and the measured value of reception quality #611 of base station apparatus 200-2 is equal to or higher than the threshold value, and so cell/subcarrier selecting section 110 selects base station apparatus 200-2 (that is, selects cell #2 (#622)). Then, cell/subcarrier selecting section 110 selects the base station apparatus for subcarrier blocks #604 to 609, in the same manner.

Next, subcarrier selection information generating section 112 in communication terminal apparatus 100 generates subcarrier selection information for each base station apparatus 200-1 and 200-2. Then, communication terminal apparatus 100 transmits the generated subcarrier selection information for each base station apparatus 200-1 and 200-2 together to base station apparatus 200-1 (step ST 501).

Base station apparatus 200-1 which receives the subcarrier selection information transmits the subcarrier selection information received from communication terminal apparatus 100, to control station 401 (step ST 502).

Next, control station 401 which receives the subcarrier selection information allocates resources for each subcarrier so that base station apparatuses 200-1 and 200-2 selected by communication terminal apparatus 100 for each subcarrier are allocated to each subcarrier. Next, control station 401 transmits to base station apparatus 200-2 (step ST503) resource allocation information according to which base control apparatus 200-2 allocates resources to communication terminal apparatus 100, and transmits to communication terminal apparatus 100 (step ST504) resource allocation information according to which base station apparatus 200-1 allocates resources to communication terminal apparatus 100.

Next, in base station apparatus 200-1 and base station apparatus 200-2 receiving the resource allocation information, resource allocating section 209 selects the subcarrier block in which base station apparatus 200-1 and base station apparatus 200-2 are selected by communication terminal apparatus 100, based on the subcarrier selection information. Further, resource allocation section 209 selects the subcarrier block, from the selected subcarrier blocks, in which base station apparatus 200-1 and base station apparatus 200-2 are allocated resources by control station 401, based on the resource allocation information, and allocates the data to be transmitted to each communication terminal apparatus 100, to the selected subcarrier blocks, thereby carrying out resource allocation. Then, base station apparatuses 200-1 and 202-2 perform inverse fast-Fourier transform of the data in IFFT section 210, thereby generating a multicarrier signal.

Next, base station apparatus 200-1 transmits the multicarrier signal as downlink data (step ST505), and base station apparatus 200-2 transmits the multicarrier signal as downlink data (step ST506). Then, communication terminal apparatus 100 receives the downlink data of the multicarrier signal.

Next, a description will be given on other embodiments of the selection method of base station apparatus 200-1 and base station apparatus 200-2 in cell/subcarrier selecting section 110. Although in the above description the received SINR and the threshold value are compared and data is not transmitted if there is no base station apparatus having an equal or greater received SINR than the threshold value, the present invention is not limited to this, and it is equallypossible to set the threshold value to "0" and always select the one having the better reception quality between base station apparatus 200-1 and base station apparatus 200-2. The present invention is neither limited to selecting one of base station apparatus 200-1 and base station apparatus 200-2 in a one-cell frequency reuse system in which the same frequency band can be used by neighboring cells, and it is equally possible to select both base station apparatus 200-1 and base station apparatus 200-2 if their received SINRs exceed the threshold value. In this case, base station apparatus 200-1 and base station apparatus 200-2 allocate the same subcarrier to communication terminal apparatus 100. However, for the spreading codes whereby data to be multiplexed upon subcarriers are multiplied, different spreading codes need to be used for base station apparatus 200-1 and base station apparatus 200-2 because the orthogonality of spreading codes cannot be maintained if the same spreading code is used. On the one hand, it is not possible to allocate the same subcarrier to communication terminal apparatus 100, in a system that requires cell frequency reuse in which the same frequency band cannot be used by neighboring cells, one of base station apparatus 200-1 and base station apparatus 200-2 having better reception quality even in the case where the both received SINRs of base station apparatus 200-1 and base station apparatus 200-2 exceed the threshold value is selected.

Thus, according to embodiment 1, the base station apparatus having good reception quality is selected for each subcarrier block taking into account whether the communication terminal apparatus is in the handover area, thereby enabling the base station apparatus to transmit data using only subcarriers providing good propagation conditions for the communication terminal apparatus and improving the transmission rate of the overall system. Also, according to embodiment 1, by selecting the base station apparatus providing good reception quality for each subcarrier block, it is possible to perform frequency scheduling taking into account whether the communication terminal apparatus is in the handover area. Accordingly, the communication terminal apparatus performing handover can achieve the site diversity effect of receiving data from both the base station apparatus of the handover source and the base station apparatus of the handover destination, thereby improving reception quality and throughput. Also, according to embodiment 1, if the threshold value to which the received SINR is compared is set such that it varies per base station apparatus, for instance, the threshold value for selecting base station apparatus 200-2 may be set greater than the threshold value for selecting base station apparatus 200-1, thereby minimizing the interference from base station apparatus 200-2 to base station apparatus 200-1.

Although in embodiment 1, communication terminal apparatus 100 transmits subcarrier selection information of base station apparatus 200-1 and subcarrier selection information of base station apparatus 200-2 together, to base station apparatus 200-1, as shown in FIG.5, the present invention is not limited to this, and it is equally possible to transmit subcarrier selection information of base station apparatus 200-1 to base station apparatus 200-1 and subcarrier selection information of base station apparatus 200-2 to base station apparatus 200-2.

### (Embodiment 2)

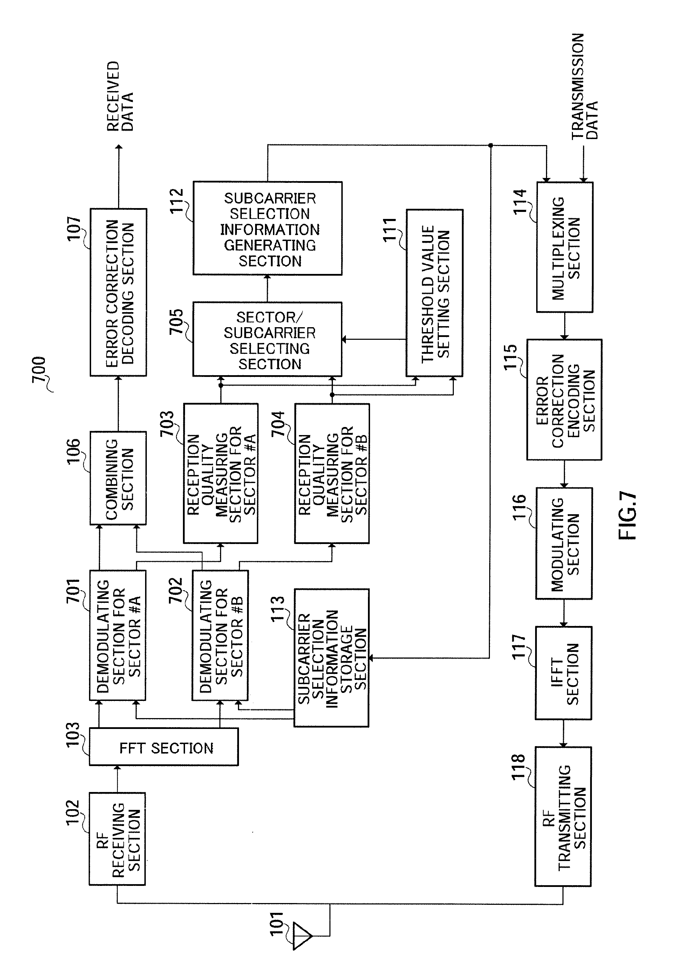

FIG.7 is a block diagram showing a configuration of communication terminal apparatus 700 according to embodiment 2 of the present invention. A case will be described with embodiment 2 where inter-sector handover is performed between sector A and sector B.

As shown in FIG.7, communication terminal apparatus 700 according to embodiment 2 removes, from communication terminal apparatus 100 according to embodiment 1 shown in FIG.1, demodulating section 104 for cell #1, demodulating section 105 for cell #2, reception quality measuring section 108 for cell #1, reception quality measuring section 109 for cell #2 and cell/subcarrier selecting section 110, and adds demodulating section 701 for sector #A, demodulating section 702 for sector #B, reception quality measuring section 703 for sector #A, reception quality measuring section 704 for sector #B and sector/subcarrier selecting section 705. In FIG.7, parts having the same configurations as in FIG.1 will be assigned the same reference numerals and descriptions thereof will be omitted.

FFT section 103 performs fast-Fourier transform of the multicarrier signal inputted from RF receiving section 102 and converts the time domain signal into a frequency domain signal, and outputs this signal to demodulating section 701 for sector #A and demodulating section 702 for sector #B.

Demodulating section 701 for sector #A demodulates a multicarrier signal inputted from FFT section 103 based on subcarrier selection information inputted from subcarrier selection information storage section 113, and outputs the result to combining section 106 and reception quality measuring section 703 for sector #A. More specifically, demodulating section 701 for sector #A demodulates only the subcarrier,in the multicarrier signal inputted from FFT section 103 that is designated in the subcarrier selection information, and outputs that subcarrier to combining section 106 and reception quality measuring section 703 for sector #A. Thus, demodulating section 701 for sector #A can demodulate the subcarrier signal to which the signal transmitted from sector #A of the base station apparatus is allocated.

Demodulating section 702 for sector #B demodulates the multicarrier signal inputted from FFT section 103 based on the subcarrier selection information inputted from subcarrier selection information storage section 113, and outputs the result to combining section 106 and reception qualitymeasuring section 704 for sector #B. More specifically, demodulating section 702 for sector #B demodulates only the subcarrier, in the multicarrier signal inputted from FFT section 103that is designated in the subcarrier selection information, and outputs that subcarrier to combining section 106 and reception quality measuring section 704 for sector B. Thus, demodulating section 702 for sector #B can demodulate the subcarrier signal to which the signal transmitted from sector #B of the base station apparatus is allocated.

Combining section 106 combines the demodulated multicarrier signal inputted from demodulating section 701 for sector #A and the demodulated multicarrier signal inputted from demodulating section 702 for sector #B, and outputs the result to error correction decoding section 107.

Reception quality measuring section 703 for sector #A divides the subcarriers into a plurality of subcarrier blocks, and measures the reception quality of sector #A for each subcarrier block, using the known signal included in the demodulated multicarrier signal inputted from demodulating section 701 for sector #A. At this time, reception quality measuring section 703 for sector #A measures the reception quality of the signals transmitted from a plurality of sectors, in each subcarrier block. Then, reception quality measuring section 703 for sector #A finds an average of the measurement results for each subcarrier block, and outputs average measurement results to sector/subcarrier selecting section 705 and threshold value setting section 111.

Reception quality measuring section 704 for sector #B divides the subcarriers into a plurality of subcarrier blocks, and measures reception quality of sector #B for each subcarrier block, using the known signal included in the demodulated multicarrier signals inputted from demodulating section 702 for sector #B. At this time, reception quality measuring section 704 for sector #B measures reception quality of the signals transmitted from a plurality of sectors, in each subcarrier block. Then, reception quality measuring section 704 for sector #B finds an average of the measurement results for each subcarrier block, and outputs the averaged measurement results to sector/subcarrier selecting section 705 and threshold value setting section 111.

Sector/subcarrier selecting section 705 selects a sector for each subcarrier block, based on the average reception quality measurement results inputted from reception quality measuring section 703 for sector #A and reception quality measuring section 704 for sector #B and based on the threshold value inputted from threshold value setting section 111. Then, sector/subcarrier selecting section 705 outputs the selected result for each subcarrier block, to subcarrier selection information generating section 112.

Threshold value setting section 111 adaptively sets the threshold value for each sector, in accordance with the measurement results, by using the measurement results of reception quality inputted from reception quality measuring section 703 for sector #A and reception quality measuring section 704 for sector B. Then, threshold value setting section 111 outputs the threshold values to sector/subcarrier selecting section 705. For the threshold value setting method, arbitrary methods can be employed, including a method of setting the same threshold value for sector #A and sector #B and a method of setting different threshold values for sector #A and sector #B.

Subcarrier selection information generating section 112 generates subcarrier selection information that represents sector information selected for each subcarrier block (that is, information as to whether or not handover is carried out for each subcarrier block) by using the selected results inputted from sector/subcarrier selecting section 705. Then, subcarrier selection information generating section 112 outputs the generated subcarrier selection information, to subcarrier selection information storage section 113 and multiplexing section 114.

Subcarrier selection information storage section 113 stores the subcarrier selection information inputted from subcarrier selection information generating section 112. Then, subcarrier selection information storage section 113 outputs the stored subcarrier selection information to demodulating section 701 for sector #A and demodulating section 702 for sector #B.

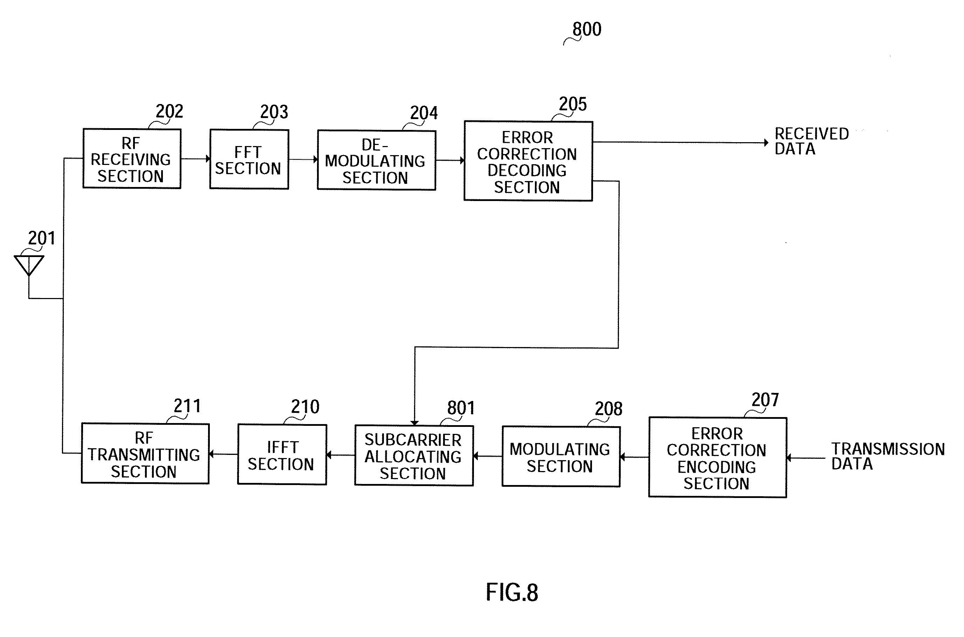

Next, the configuration of base station apparatus 800 will be described using FIG.8. FIG.8 is a block diagram showing a configuration of base station apparatus 800.

As shown in FIG.8, base station apparatus 800 according to embodiment 2 removes, from base station apparatus 200 according to embodiment 1 shown in FIG.2, wired transmitting/receiving section 206 and resource allocating section 209 and adds subcarrier allocating section 801. In FIG.8, parts having the same configurations as in FIG.2 will be assigned the same reference numerals, and descriptions thereof will be omitted.

Error correction decoding section 205 performs error correction decoding on the received signal inputted from demodulating section 204 to extract the subcarrier selection information included in the received signal, and outputs the extracted subcarrier selection information to subcarrier allocation section 801 and outputs the result after the extraction of subcarrier selection information as received data.

Modulating section 208 demodulates the transmission data inputted from error correction encoding section 207 to generate a transmission signal, and outputs the generated transmission signal to subcarrier allocating section 801.

Subcarrier allocating section 801 allocates the transmission signal inputted from modulating section 208 to each subcarrier block, based on the subcarrier selection information inputted from error correction decoding section, such that the transmission signal for the sector selected by communication terminal apparatus 700 is allocated to each subcarrier block, and outputs the result to IFFT section 210.

IFFT section 210 performs inverse fast-Fourier transform of the transmission signal inputted from subcarrier allocating section 801 and converts the frequency domain signal into a time domain signal, thereby generating a multicarrier signal Then, IFFT section 210 outputs the generated multicarrier signal to RF transmitting section 211.

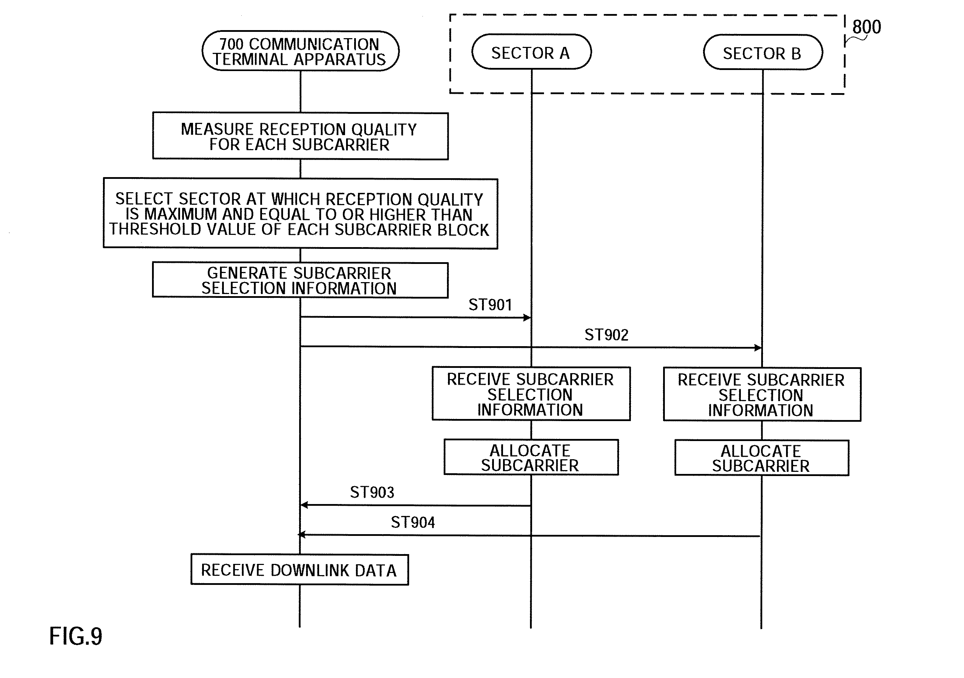

Next, the operation of communication terminal apparatus 700 and base station apparatus 800 will be described using FIG.9. FIG.9 is a sequence diagram showing the operation of communication terminal apparatus 700 and base station apparatus 800. In FIG.9, communication terminal apparatus 700 has the same configuration in FIG.7, and base station apparatus 800 has the same configuration as in FIG.8.

In FIG.9, communication terminal apparatus 700 measures and finds an average of reception quality for each subcarrier block using reception quality measuring section 703 for sector #A and reception quality measuring section 704 for sector #B.

Next, between sector A and sector B, sector/subcarrier selecting section 705 of communication terminal apparatus 700 selects, for each subcarrier, the sector having, for instance, the received SINR (Signal-to-Interference plus Noise Ratio), which represents the measured value of reception quality, is maximum and equal to or higher than a threshold value. Also, if the received SINR of both sector A and sector B are not equal to or higher than the threshold value, sector/subcarrier selecting section 705 selects neither base station apparatus.

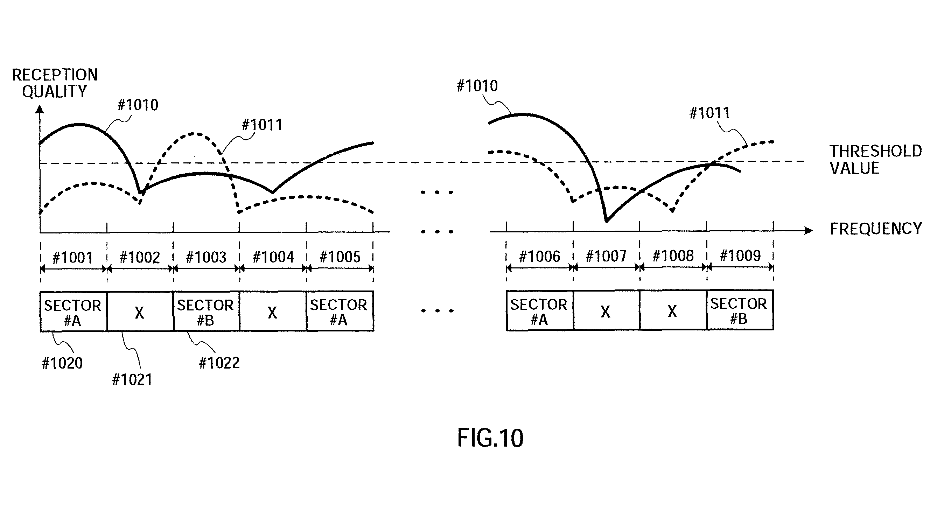

FIG.10 shows reception quality #1010 in sector A and reception quality #1011 in sector B for each subcarrier block. Subcarrier blocks #1001 to #1009 each show one subcarrier block. In FIG. 10, in subcarrier block #1001, reception quality #1010 in sector A is better than reception quality #1011 in sector B and the measured value of reception quality #1010 in sector A is equal to or higher than the threshold value, and so sector/subcarrier selecting section 705 selects sector A (#1020). Also, in subcarrier block #1002, the measured value of reception quality both for the sector A and sector B is less than the threshold value, sector/subcarrier selecting section 705 selects neither the sector A nor the sector B (#1021) . Therefore, no data is transmitted in subcarrier block #1002. In subcarrier block #1003, reception quality #1011 in sector B is better than reception quality #1010 in sector A, and the measured value of reception quality #1011 in sector B is equal to or higher than the threshold value, and so sector/subcarrier selecting section 705 selects sector B (#1022). Then, sector/subcarrier selecting section 705 selects the sectors for subcarrier blocks #1004 to #1009 in a similar way.

Next, in communication terminal apparatus 700, subcarrier selection information generating section 112 generates subcarrier selection information. Then, communication terminal apparatus 700 transmits the generated subcarrier selection information to sector A of base station apparatus 200 (step ST901) and the generated subcarrier selection information to sector B of base station apparatus 200 (step ST902).

In base station apparatus 800 that receives the subcarrier selection information, subcarrier allocating section 801 allocates the data transmitted from each selected sector to the subcarrier block where the sectors are selected,and performs inverse fast-Fourier transform to generate a multicarrier signal.

Next, base station apparatus 800 transmits the multicarrier signal from sector A as downlink data (step ST903) and the multicarrier signal from sector B as downlink data (step ST 904). Then, communication terminal apparatus 700 receives the downlink data of multicarrier signal.

Next, a description will be given of other embodiments of the selection method for sector A and sector B in sector/subcarrier selecting section 705. Although in the above description the received SINR and the threshold value are compared and data is not transmitted if there is no sector having an equal or greater received SINR than the threshold value, the present invention is not limited to this, and it is equally possible to set the threshold value to "0" and always select the one having the better reception quality between sector A and sector B. The present invention is not limited to the case where one of sector A and sector B is selected, and it is equally possible to select both sector A and sector B if their received SINRs exceed the threshold value. In this case, sector A and sector B allocate the same subcarriers to communication terminal apparatus 700. Since the orthogonality of the spreading code to be multiplied with the data multiplexed on the subcarriers, is damaged when the same spreading code is used, different spreading codes are used for sector A and sector B.

Thus, according to embodiment 2, the sector having good reception quality is selected for each subcarrier block taking into account whether the communication terminal apparatus is in the handover area, thereby transmitting data from each sector using only subcarriers providing good propagation conditions for the communication terminal apparatus and improving the transmission rate of the overall system. Also, according to embodiment 2, by selecting a sector of good reception quality for each subcarrier block, it is possible to perform frequency scheduling taking into account whether the communication terminal apparatus is in the handover area. Accordingly, the communication terminal apparatus performing handover can achieve the site diversity effect of receiving data from both the sector of the handover source and the sector of the handover destination, thereby improving reception quality and throughput. Also, according to embodiment 2, if the threshold value to which the received SINR is compared is set such that it varies per sector, for instance, the threshold value for selecting sector B may be set greater than the threshold value for selecting sector A, thereby minimizing the interference from sector B to sector A.

### (Embodiment 3)

Although cases have been described above with embodiment 1 and embodiment 2 where base station apparatuses are allocated to a single communication terminal apparatus on a per subcarrier block basis, a case will be described here with embodiment 3 where base station apparatus are assigned to a plurality of communication terminal apparatuses on a per subcarrier block basis. In embodiment 3, the control station sees the condition of allocation of each base station apparatus for each subcarrier block, to carry out frequency scheduling between base station apparatuses.

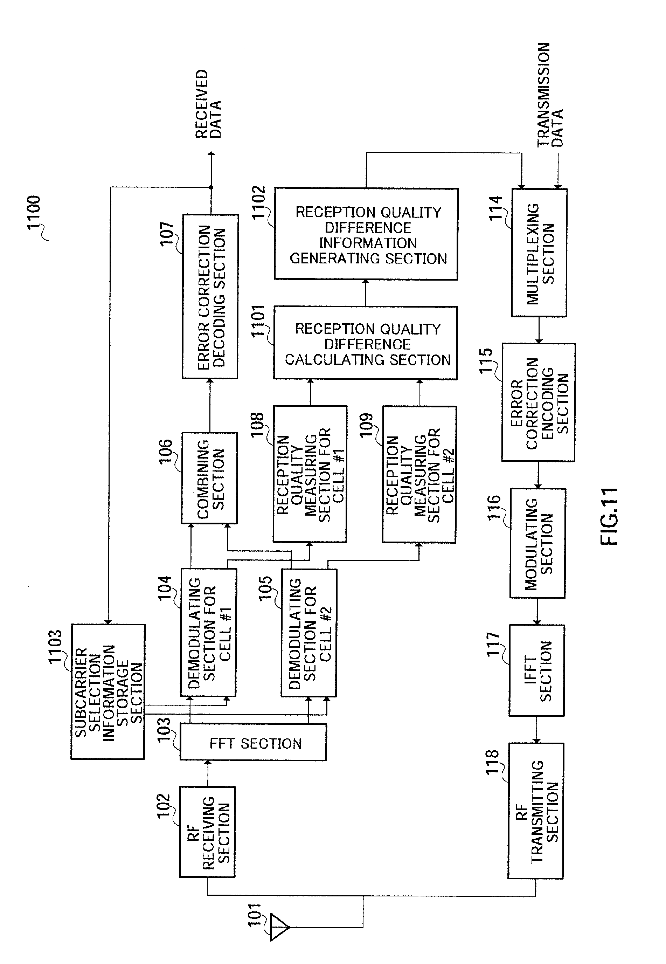

FIG.11 is a block diagram showing the configuration of communication terminal apparatus 1100 according to embodiment 3 of the present invention.

As shown in FIG.11, communication terminal apparatus 1100 according to embodiment 3 removes, from communication terminal apparatus 100 according to embodiment 1 shown in FIG.1, cell/subcarrier selecting section 110, threshold value setting section 111 and subcarrier selection information generating section 112, and adds reception quality difference calculating section 1101 and reception quality difference information generating section 1102, and furthermore provides subcarrier selection information storage section 1103 in place of subcarrier selection information storage section 113. In FIG.11, parts having the same configuration as in FIG.1 will be assigned the same reference numerals and descriptions thereof will be omitted.

Reception quality measuring section 108 for cell #1 divides subcarriers in a plurality of subcarrier blocks, and measures reception quality of cell #1 for each subcarrier block, using the known signal included in the demodulated multicarrier signal inputted from demodulating section 104 for cell #1. At this time, reception quality measuring section 108 for cell #1 measures the reception quality of the signals transmitted from a plurality of base station apparatuses, for each subcarrier block. Then, reception quality measuring section 108 for cell #1 finds an average of measurement results for each subcarrier block and outputs average measurement results to reception quality difference calculating section 1101.

Reception quality measuring section 109 for cell #2 divides the subcarriers into a plurality of subcarrier blocks, and measures reception quality of cell #2 for each subcarrier block using the known signal included in the demodulated multicarrier signals inputted from demodulating section 105 for cell #2. At this time, reception quality measuring section 109 for cell #2 measures reception quality of signals transmitted from a plurality of base station apparatuses, for each subcarrier block. Then, reception quality measuring section 109 for cell #2 finds an average of the measurement results for each subcarrier block, and outputs average measurement results to reception quality difference calculating section 1101.

Error correction decoding section 107 performs error correction decoding on the combined multicarrier signal inputted from combining section 106 and outputs the result as received data. Also, error correction decoding section 107 performs error correction decoding on the multicarrier signal, and outputs the subcarrier selection information included in the multicarrier signal, to reception quality difference calculating section 1101 and subcarrier selection information storage section 1103.

Reception quality difference calculating section 1101 calculates reception quality differences between subcarrier blocks, based on the subcarrier selection information inputted from error correction decoding section 107 and the reception quality measurement results inputted from demodulating section 104 for cell #1 and demodulating section 105 for cell #2. More specifically, reception quality difference calculating section 1101 calculates reception quality differences between the most damaged reception quality, among the reception qualities of the base station apparatuses in each allocated subcarrier block reported in the subcarrier selection information, and the reception quality of each base station apparatus in the other subcarrier blocks. Then, reception quality difference calculating section 1101 outputs the calculation results of reception quality differences to reception quality difference information generating section 1102.

Reception quality difference information generating section 1102 generates reception quality difference information, based on the calculation results of reception quality difference inputted from reception quality differences calculating section 1101, and outputs this information to multiplexing section 114.

Multiplexing section 114 multiplexes the reception quality difference information and transmission data inputted from reception quality difference information generating section 1102, and outputs the result to error correction coding section 115.

Subcarrier selection information storage section 1103 stores the subcarrier selection information inputted from error correction decoding section 107. Then, subcarrier selection information storage section 1103 outputs the stored subcarrier selection information to demodulating section 104 for cell #1 and demodulating section 105 for cell #2. The configuration of the base station apparatus is the same as in FIG.2 except that reception quality difference information received from communication terminal apparatus 1100 is transmitted to the control station and subcarrier selection information received from the control station is transmitted to the communication terminal apparatus, and thus, further descriptions thereof will be omitted.

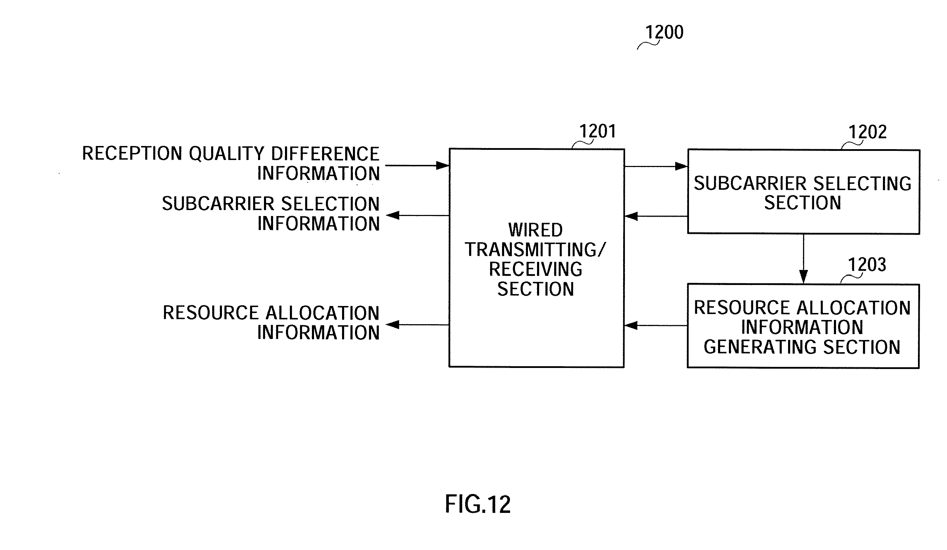

Next, the configuration of control station 1200 will be described using FIG. 12. FIG.12 is a block diagram showing the configuration of control station 1200.

Wired transmitting/receiving section 1201 outputs the reception quality difference information received from the base station apparatus, to subcarrier selecting section 1202. Also, wired transmitting/receiving section 1201 transmits the subcarrier selection information inputted from subcarrier selecting section 1202 and the resource allocation information inputted fromresource allocation information generating section 1203, to the base station apparatus.

Subcarrier selecting section 1202, which is a selecting section, selects a base station apparatus for each subcarrier block, for each communication terminal apparatus, based on the reception quality difference information inputted from wired transmitting/receiving section 1201, and allocates the base station apparatuses for each subcarrier block. More specifically, subcarrier selecting section 1202 selects base station apparatuses that are not allocated to other communication terminal apparatuses in each subcarrier block, starring from base station apparatuses having greater reception quality difference in the reception quality difference information in all subcarrier blocks. Then, subcarrier selecting section 1202 generates the subcarrier selection information which is the information of the base station apparatus selected for each subcarrier block, and outputs this information to wired transmitting/receiving section 1201 and resource allocation information generating section 1203.

Resource allocation information generating section 1203 allocates resources to each communication terminal apparatus, based on the subcarrier selection information inputted from subcarrier selecting section 1202. That is resource allocation information generating section 1203 allocates resources such that the base station apparatus selected by subcarrier selection information is allocated to each subcarrier block. Then, resource allocation information generating section 1203 outputs the resource allocation information, which is information on the allocated resources, to wired transmitting receiving section 1201.

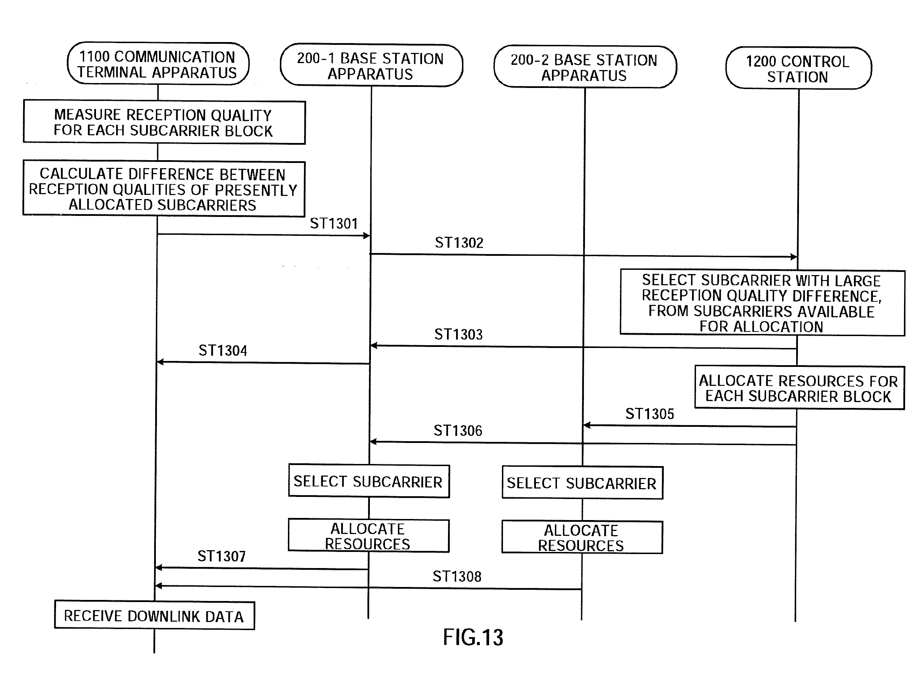

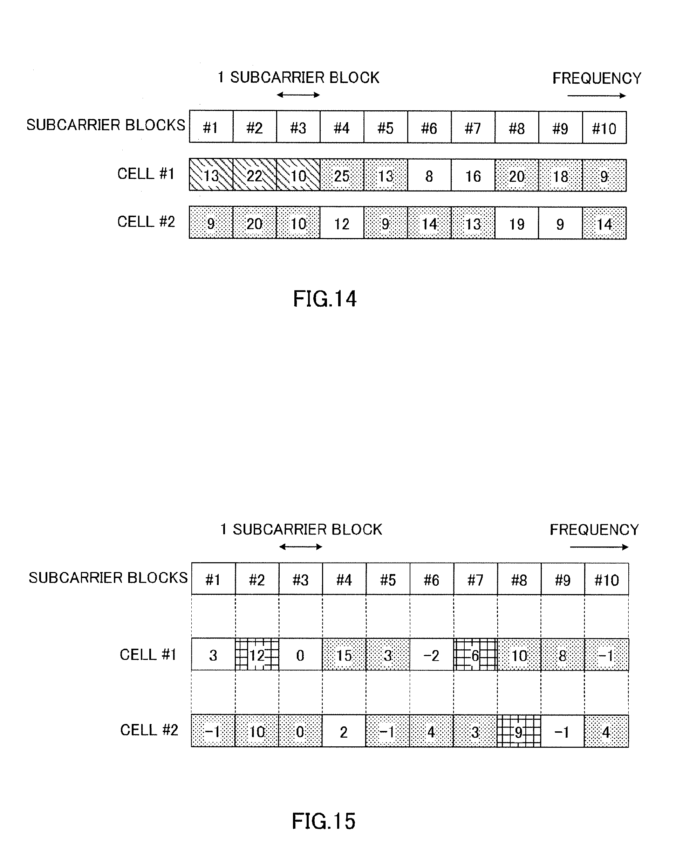

Next, the operation of communication terminal apparatus 1100, base station apparatus and control station 1200 will be described using FIG.13 and FIG.14. FIG.13 is a sequence diagram showing the operation of communication terminal apparatus 1100, base station apparatus 200 and control station 1200.

Communication terminal apparatus 1100 performs communication with base station apparatus 200-1 of cell #1 and base station apparatus 200-2 of cell #2, in the handover area. Also, control station 1200 which manages base station apparatuses 200-1 and 200-2 is provided in higher layer of base station apparatuses 200-1 and 200-2, and this control station 1200 is connected to a communication network.

In FIG.13, in communication terminal apparatus 1100, reception quality measuring section 108 for cell #1 and reception quality measuring section 109 for cell #2 measure and finds an average of reception quality for each subcarrier block. FIG.14 shows reception quality measured by reception quality measuring section 108 for cell #1 and reception quality measuring section 109 for cell #2. For communication terminal apparatus 1100, subcarrier blocks #1 to #3 are allocated in cell #1 and no subcarrier block is allocated in cell #2. Also, no communication terminal apparatus is allocated subcarrier blocks #6 and #7 in cell #1 and subcarrier blocks #4, #8 and #9 in cell #2. That is to say, subcarrier blocks #6 and #7 of cell #1 and subcarrier blocks #4, #8 and #9 of cell #2 are subcarrier blocks which are available for allocation to communication terminal apparatus 1100.

Next, in communication terminal apparatus 1100, reception quality difference calculating section 1101 selects the reception quality of cell #1 in subcarrier block #3, 10dB, which is the most damaged reception quality, in subcarrier blocks #1 to #3 allocated to communication terminal apparatus. Then, reception quality difference calculating section 1101 calculates differences in reception quality between reception quality in subcarrier block #3 of cell #1, 10dB, and the reception quality in cells #1 and #2 in each subcarrier block.

FIG.15 shows difference in reception quality calculated by reception calculation difference calculating section 1101. Communication terminal apparatus 1100 generates reception quality difference information shown in FIG.15, in reception quality difference information generating section 1102.

Next, communication terminal apparatus 1100 transmits the generated reception quality difference information to base station apparatus 200-1, (step ST1302). In this case, if communication terminal apparatus 1100 is set not to transmit reception quality difference information of the subcarrier blocks whose reception quality difference has a negative value, like the reception quality difference between subcarrier blocks #6 and #10 of cell #1 and subcarrier blocks #1, #5 and #9 of cell #2, it is possible to reduce the amount of uplink signaling. Communication terminal apparatus 1100 may be set to transmit the reception quality difference information of all subcarrier blocks, in spite of the positive reception quality difference.

Base station apparatus 200-1, which receives the reception quality difference information, transmits the reception quality difference information from communication terminal apparatus 1100 to control station 1200 (step ST1302).

Next, subcarrier selecting section 1202 of control station 1200, which receives the reception quality difference information, selects subcarrierblock #2 of cell #1 with reception quality difference 12 dB, which is the highest reception quality difference, from the reception quality differences of subcarrier blocks #1 to #3 of cell #1 which are allocated to communication terminal apparatus 1100, and the reception quality differences of subcarrier blocks #6 and #7 of cell #1 and subcarrier blocks #4, #8 and #9 of cell #2 which are not allocated at all to the communication terminal apparatus. Further, subcarrier selecting section 1202 selects, in order, from the largest reception quality difference, among the reception quality differences of subcarrier blocks #1 to #3 of cell #1 which are allocated to communication terminal apparatus 1100, and the reception quality differences of subcarrier block #6 and #7 of cell #1 and subcarrier blocks #4, #8 and #9 of cell #2. Specifically, subcarrier selecting section 1202 selects, in order, subcarrier block #8 of cell #2 with a reception quality difference of 9 dB, subcarrier block #7 of cell #1 with a reception quality difference of 8 dB, subcarrier block #1 of cell #1 with a reception quality difference of 3 dB, and subcarrier block #4 of cell #2 with a reception quality difference of 2 dB. Control station 1200 needs not to select all subcarrier blocks available for allocation and may select part of subcarrier blocks, in order, from the subcarrier blocks available for allocation having the largest reception quality difference.

Next, control station 1200 transmits subcarrier selection information, which is information of the base station apparatus selected by subcarrier selecting section 1202 for each subcarrier block, to base station apparatus 200-1 (step ST1303), and base station apparatus 200-1 transmits the received subcarrier selection information to communication terminal apparatus 1100 (step ST1304).

Next, in control station 1200, resource allocation information generating section 1203 allocates resources for each subcarrier such that the base station apparatus selected by subcarrier selecting section 1202 is allocated to each subcarrier block. Then, control station 1200 transmits to base station apparatus 200-2 (step ST1305), the resource allocation information according to which base station apparatus 200-2 allocates resources to communication terminal apparatus 1100, and transmits to base station apparatus 200-1 (step ST1306), the resource allocation information according to which base station apparatus 200-1 allocates resources to communication terminal apparatus 1100.

Next, in base station apparatus 200-1 and base station apparatus 200-2 which receives the resource allocation information, resource allocating section 209 selects the subcarrier block in which base station apparatus 200-1 1 and base station apparatus 200-2 are selected by communication terminal apparatus 100, based on the subcarrier selection information. Further, resource allocating section 209 selects the subcarrier block, from the selected subcarrier blocks, to which it allocates resources in control station 1200, based on the resource allocation information, and performs resource allocation by allocating the data to be transmitted to each communication terminal apparatus 1100, to the selected subcarrier blocks. Then, in base station apparatuses 200-1 and 202-2, IFFT section 210 performs inverse fast-Fourier transform of the data and generates a multicarrier signal.

Next, base station apparatus 200-1 transmits the multicarrier signal as downlink data (step ST1307), and base station apparatus 200-2 transmits the multicarrier signal as downlink data (step ST1308). Then, communication terminal apparatus 1100 receives the downlink data of a multicarrier signal.

Thus, according to embodiment 3, the base station apparatus providing good reception quality is selected for each subcarrier block taking into account whether the communication terminal apparatus is in the handover area, thereby enabling the base station apparatus to transmit data using only subcarriers which provide good propagation conditions for the communication terminal apparatus, and improving the transmission rate of the overall system. Also, according to embodiment 3, by selecting the base station apparatus which provides good reception quality for each subcarrier block, it is possible to perform frequency scheduling taking into account whether the communication terminal apparatus is in the handover area. Accordingly, the communication terminal apparatus performing handover can achieve the site diversity effect of receiving data from both the base station apparatus of the handover source and the base station apparatus of the handover destination, thereby improving reception quality and throughput. Also, according to embodiment 3, the base station apparatus is selected taking into account the condition allocation of each base station apparatus for each subcarrier block, optimum frequency scheduling can be carried out where a plurality of communication terminal apparatuses are present.

Although with embodiment 3 the base station apparatus is selected for each subcarrier block, the present invention is not limited to this, and it is equally possible to apply embodiment 3 to embodiment 2 and select a sector for each subcarrier block.

Although with above embodiments 1 to 3 an average SINR is calculated for each subcarrier block, the present invention is not limited to this, and it is equallypossible to calculate an average received SINR of subcarriers over a certain time period and then find an average for each subcarrier block. Also, although with embodiment 1 to embodiment 3 reception quality is measured per subcarrier block and the base station apparatus is selected per subcarrier block, the present invention is not limited to this, and it is equally possible to measure reception quality per subcarrier and select the base station apparatus per subcarrier.

The present application is based on Japanese Patent Application No.2004-357309, filed on December 9, 2004, and Japanese Patent Application No.2005-311426, filed on October 26, 2005, the entire contents of which are expressly incorporated by reference herein.

### Industrial Applicability

The communication terminal apparatus, control station and subcarrier communication method according to this invention are suitable for use in a multi-user communication system employing OFDM as demodulation scheme, for instance.

## Claims

1. A communication terminal apparatus comprising:
a reception quality measuring section that divides subcarriers into a plurality of groups and measures reception quality of signals transmitted from a plurality of base station apparatuses per group;
a selecting section that selects a base station apparatus for each group based on the reception quality measured in the reception quality measuring section;
a transmitting section that transmits information about the base station apparatuses selected in the selecting section;
a receiving section that receives multicarrier signals transmitted from the base station apparatuses based on the information about the base station apparatuses transmitted from the transmitting section; and
a decoding section that decodes the multicarrier signals received in the receiving section in accordance with the result of the selection.

2. The communication terminal apparatus of claim 1, wherein the selecting section sets threshold values for the base station apparatuses, said threshold values varying per base station apparatus, and selects the base station apparatuses by comparing measurement values showing the reception quality to the threshold values.

3. The communication terminal apparatus of claim 1, wherein the selecting section selects a base station apparatus having the best reception quality for each group.

4. A communication terminal apparatus comprising:
a reception quality measuring section that divides subcarriers into a plurality of groups and measures reception quality of signals transmitted from a plurality of sectors per group;
a selecting section that selects a sector for each group based on the reception quality measured in the reception quality measuring section;
a transmitting section that transmits information about the sectors selected by the selecting section;
a receiving section that receives multicarrier signals transmitted from the sectors based on the information about the sectors transmitted from the transmitting section; and
a decoding section that decodes the multicarrier signals received by the receiving section, in accordance with the result of the selection.

5. A control station comprising:
a reception quality difference information acquiring section that acquires reception quality difference information representing information about reception quality differences between the most damaged reception quality among reception qualities of signals at a communication terminal for each group comprised of a plurality of subcarriers, said signals being transmitted from base station apparatuses allocated to the communication terminal apparatus, and the reception qualities of the signals from base station apparatuses at the communication terminal apparatus for each group;
a selecting section that selects, for each group, a base station apparatus which is not allocated to other communication terminal apparatuses based on the reception quality difference information acquired by the reception quality difference information acquiring section, as a base station apparatus to be allocated to the communication terminal apparatus; and
a reporting section that reports information about the base station apparatus selected by the selecting section to the communication terminal apparatus.

6. The control station of claim 5, wherein the selecting section selects the base station apparatus starting from the base station apparatus having a greater reception quality difference in the reception quality difference information in the groups.

7. A communication terminal apparatus reporting the reception quality difference information to the control station of claim 5, the communication terminal apparatus comprising:
a reception quality measuring section that measures the reception quality of the base station apparatus for each group;
a reception quality difference calculating section that calculates reception quality difference between the reception qualities measured by the reception quality measuring section for each group;
a transmitting section that transmits the reception quality difference information representing information about the reception quality differences calculated by the reception quality difference calculating section;
a receiving section that receives multicarrier signals transmitted from the base station apparatus and the information about the base station apparatus reported by the reporting section in accordance with the reception quality difference information transmitted from the transmitting section; and
a decoding section that decodes the multicarrier signals received by the receiving section in accordance with the information about the base station apparatus received by the receiving section.

8. A multicarrier communication method comprising:
dividing subcarriers into a plurality of groups and measuring reception quality of signals transmitted from a plurality of base station apparatuses for each group;
selecting a base station apparatus for each group based on the measured reception quality;
transmitting information about the selected base station apparatus;
receiving multicarrier signals transmitted from the base station apparatuses based on the transmitted information about the base station apparatus; and
decoding the received multicarrier signals in accordance with results of the selection.
